# EUROPÄISCHE PATENTANMELDUNG

(11) **EP 1 621 691 A2**
(43) Veröffentlichungstag der Anmeldung: **01.02.2006**
(21) Anmeldenummer: 05101903.2
(22) Anmeldetag: 11.03.2005
(51) Int. Cl.: E03D 9/052

(54) **Deodorisierungsvorrichtung und - Verfahren für Toiletten und damit ausgerüstete Toilette**

(30) Priorität: 30.07.2004 DE 202004012063 U
(71) Anmelder: VILLEROY & BOCH AG, 66688 Mettlach (DE)
(72) Erfinder: Czapla, Christian, 66793, Saarwellingen (DE); Becker, Ralf, 66663, Merzing (DE)
(74) Vertreter: Gritschneder, Martin

(57) **Zusammenfassung**

Zum Vermeiden von lästigen Gerüchen auf Toiletten wird mittels eines Lüfters (18) Luft aus dem Innenbereich des WC-Beckens (34) abgesaugt und werden mittels einer Deodorisierungseinrichtung (24) Geruchsmoleküle beseitigt. Die Vorrichtung wird mittels einer Schalteinrichtung bei Benutzung der Toilette eingeschaltet. Die abgesaugte Luft wird mittels eines Sensors (16) auf Geruchsmoleküle untersucht, der bei Vorhandensein von Geruchsmolekülen ein Signal erzeugt. Ohne dieses Signal wird der Lüfter (18) mit einer niedrigen Leistung betrieben, und bei Anliegen dieses Signals wird er mit einer höheren Leistung betrieben.

## Beschreibung

Die Erfindung betrifft eine Vorrichtung und ein Verfahren zum Vermeiden von lästigen Gerüchen auf Toiletten, wobei mit einer Lüftereinrichtung Luft aus dem Innenbereich des WC-Beckens abgesaugt wird und mittels einer Deodorisierungseinrichtung die Geruchsmoleküle beseitigt werden. Mittels einer Schalteinrichtung wird die Lüftereinrichtung bei Benutzung der Toilette eingeschaltet.

Aus US-A-2 001 592 ist eine Vorrichtung bekannt, bei der aus dem Inneren des WC-Beckens die Luft mittels eines Lüfters abgesaugt wird und durch eine Ionisationseinrichtung geleitet wird, um Geruchsmoleküle zu oxidieren. Der Lüftermotor und die Ionisationseinrichtung werden durch einen Schalter eingeschaltet, der durch das Herunterklappen des WC-Sitzbrettes betätigt wird. Der Lüfter und die Ionisationseinrichtung sind in einem Gehäuse untergebracht, das seitlich neben der Schwenkachse des WC-Sitzbrettes angebracht ist.

Aus US-A-6 163 893 ist es bei einer weiteren solchen Vorrichtung bekannt, die Luft über mehrere Öffnungen im WC-Sitzbrett anzusaugen und dann durch die Ozon erzeugende Einrichtung und ein Aktivkohlefilter zu schicken.

Aus JP-A-05168687 ist es bei einer solchen Vorrichtung bekannt, die Luft noch durch einen Katalysator zu leiten. Die Betriebsstunden des Katalysators werden aufsummiert, und die Arbeitsweise der Ionisationseinrichtung wird der abnehmenden Leistungsfähigkeit des Katalysators angepasst.

Aus EP-B1-0 331 192, Fig. 12, ist eine ähnliche Anordnung bekannt, wobei die Luft durch das Überlaufrohr des Spülkastens abgesaugt wird und aus dem Spülkasten durch die Ionisiereinrichtung und einen Katalysator gesaugt wird. Die Steuerung der Anlage erfolgt über einen Licht-Detektor am Sitzbrett.

Aus JP-A-03290538 ist eine solche Toiletten-Deodorisierungsvorrichtung bekannt, bei der die Benutzung der Toilette mittels eines Sensors erkannt wird und daraufhin die Vorrichtung eingeschaltet wird. Nach Beendigung der Benutzung bleibt sie noch eine vorgegebene Zeitspanne eingeschaltet. Ähnliche Vorrichtungen sind auch aus JP-A-2001262663, JP-A-09195359, JP-A-07279213 und JP-A-07268928 bekannt.

Aus EP-A-0 567 775 ist es bekannt, Raumluft für Wohn- und Arbeitsräume mittels eines Klimazentralgerätes aufzubereiten. Vor der Behandlung wird die Raumluft mit einem Schadstoff-Sensor auf oxidierbare Schadstoffe analysiert. Die Schadstoffe werden mittels Ozon aus einem Oxidator oxidiert, wobei die Menge des im Oxidator erzeugten Ozons in Abhängigkeit von dem Signal des Schadstoff-Sensors gesteuert wird. Die Raumluft wird ferner in einer Filtereinrichtung behandelt, wobei noch vorhandenes Ozon in stabilen, molekularen Sauerstoff umgewandelt wird. Das in dem Ozonisator erzeugte Ozon wird zusätzlich von einem Ozon-Sensor gesteuert und geregelt, der nach der Filtereinrichtung angeordnet ist.

Aus EP-A-1 445 387 mit Priorität vom 3. Februar 2003, die jedoch nachveröffentlicht ist, ist eine Vorrichtung der eingangs genannten Art bekannt, die einen Sensor aufweist, der die abgesaugte Luft auf oxidierbare Geruchsmoleküle untersucht und ein Signal erzeugt, das die Konzentration oxidierbarer Geruchsmoleküle in der abgesaugten Luft wiedergibt, wobei die Ionisationseinrichtung in Abhängigkeit von dem Signal des Sensors gesteuert wird. Die Steuerung der Ionisationseinrichtung beinhaltet dabei, dass die Ionisationseinrichtung aktiviert wird, sobald der Sensor anzeigt, dass in der abgesaugten Luft oxidierbare Geruchsmoleküle enthalten sind. Der Lüfter wird ferner so gesteuert, dass er mit einer ersten Leistung arbeitet, wenn das Signal des Sensors keine oxidierbaren Geruchsmoleküle in der abgesaugten Luft anzeigt, und dass er mit einer zweiten, höheren Leistung arbeitet, wenn das Signal das Vorhandensein oxidierbarer Geruchsmoleküle in der abgesaugten Luft anzeigt. Die Stromversorgung erfolgt über das Stromnetz mittels eines Netzteils mit einem Netztrafo.

Aus EP-A-0 526 077 ist eine Vorrichtung bekannt, die mittels eines Lüfters Luft aus einem WC-Becken absaugt und durch einen wabenförmigen Aktivkohlefilter leitet, der Jod oder anorganisches Jodid trägt. Der Lüfter wird mittels eines Schalters oder eines Sensors eingeschaltet. Der Sensor kann ein Fotosensor, z.B. ein Infrarotsensor oder ein Drucksensor sein, der die Benutzung der Toilette anzeigt. Die Stromversorgung kann durch eine Batterie oder mittels eines Trafos über das Stromnetz erfolgen. Bei der Ausführungsform von Fig. 16 dieser Druckschrift ist zusätzlich zu diesem Sensor ein Geruchssensor vorhanden, der hinter dem Aktivkohlefilter angeordnet ist und es anzeigt, wenn die Wirkung des Filters nachlässt.

Aus US-A-6 052 837 ist eine ähnliche Vorrichtung mit ebenfalls einem Aktivkohlefilter und einem Lüfter, sowie einem Schalter oder Sensor bekannt, der die Benutzung der Toilette signalisiert. Zusätzlich ist ein Strömungsmesser vorhanden und wird die Drehzahl des Lüfters so gesteuert, dass ein bestimmter Luftdurchsatz erreicht wird. Die Drehzahl des Lüfters wird außerdem so gesteuert, dass sie während der Benutzung der Toilette höher ist und danach für eine bestimmte Zeit niedriger.

Der Erfindung liegt die Aufgabe zugrunde, eine Vorrichtung und ein Verfahren zum Vermeiden lästiger Gerüche auf Toiletten zu schaffen, mittels derer Gerüche sehr wirksam und zuverlässig unterdrückt werden können, wobei der Stromverbrauch sehr gering gehalten werden soll.

Diese Aufgabe wird durch eine Vorrichtung mit den Merkmalen des Anspruchs 1 und ein Verfahren mit den Merkmalen des Anspruchs 6 gelöst.

Gegenstand der Erfindung ist ferner eine Toilettenausstattung, die die vorausgehend genannte Deodorisierungsvorrichtung enthält.

Bevorzugte Ausgestaltungen der Erfindung sind Gegenstand der Unteransprüche.

Durch die Schalteinrichtung wird bei Benutzung der Toilette ein Benutzungssignal erzeugt, auf das die Steuerung anspricht, indem die Lüftereinrichtung und der Geruchssensor eingeschaltet werden. Strom wird dadurch nur während der Benutzung der Toilette verbraucht. Die Schalteinrichtung kann ein Schalter sein, der unter dem Sitzbrett angeordnet ist und beim Niederdrücken des Sitzbrettes einen Stromkreis schließt. Es können aber auch bekannte Einrichtungen wie kapazitive Sensoren oder Infrarotsensoren verwendet werden, um die Gegenwart einer Person und damit die Benutzung der Toilette festzustellen.

Die Schalteinrichtung kann auch ein piezoelektrischer Druckwandler sein, der in eine Unterlegscheibe integriert ist, die zwischen dem stationären Scharnierteil des Sitzbrettes und der Oberseite des WC-Beckens angeordnet ist. Wenn sich der Benutzer auf das Sitzbrett setzt, so wird auf den piezoelektrischen Wandler Druck ausgeübt, so dass er seinen Widerstandswert ändert, und zwar verringert. Der dadurch fließende Strom wird als Benutzungssignal von der Steuerung aufgenommen.

Eine weitere Möglichkeit besteht darin, eine der beiden Befestigungsschrauben des stationären Scharnierteils des Sitzbrettes verschiebbar in der zu der Befestigung dieser Schraube vorgesehenen Öffnung in der Oberseite des WC-Beckens zu lagern und durch ein Federelement abzustützen. Die Befestigungsschraube wird dann gegen die federnde Abstützung etwas nach unten gedrückt, wenn sich eine Person auf das Sitzbrett setzt. Diese Verlagerung der Befestigungsschraube wird dann dazu verwendet, um einen auf der Unterseite des Randes des WC-Beckens angebrachten Schalter zu betätigen, der die Schalteinrichtung darstellt.

Diese Ausführungsform kann dadurch realisiert werden, dass die Befestigungsschraube in einer inneren Hülse befestigt ist, die wiederum in einer äußeren Hülse vertikal verschiebbar gelagert ist. Beide Hülsen haben an ihrem oberen Ende einen scheibenförmigen Flansch, und zwischen beiden Flanschen ist ein elastischer Ring eingefügt. Die innere Hülse steht am unteren Ende über die äußere Hülse hervor, und an ihrem unteren Ende ist ein Betätigungsarm befestigt, der im Normalzustand von unten gegen einen Mikroschalter drückt, der am unteren Ende der äußeren Hülse festgelegt ist. Wenn sich der Benutzer der Toilette auf das Sitzbrett setzt, so wird die innere Hülse gegen die elastische Kraft des Ringes nach unten gedrückt, so dass der Mikroschalter freigegeben wird. Der Mikroschalter ist so ausgelegt, dass er dadurch einen Stromkreis schließt, wodurch die Steuerung der Deodorisierungsvorrichtung aktiviert wird.

Sobald die Steuerung aktiviert ist, wird die Lüftereinrichtung eingeschaltet und der Geruchssensor in Betrieb gesetzt. Um den Stromverbrauch möglichst niedrig zu halten, wird die Lüftereinrichtung zunächst nur in einen Bereitschaftszustand geschaltet, in dem ein relativ geringer Luftstrom erzeugt wird. Erst wenn der Sensor das Vorhandensein von Geruchsmolekülen anzeigt, wird die Lüftereinrichtung auf volle Leistung geschaltet (Betriebszustand).

Die Lüftereinrichtung kann einen oder mehrere Lüfter aufweisen. Enthält die Lüftereinrichtung zwei Lüfter, so können diese unterschiedliche Leistungen haben, wobei die Steuerung dann im Bereitschaftszustand nur den Lüfter mit der niedrigen Leistung einschaltet und im Betriebszustand dann beide Lüfter oder den Lüfter mit der höheren Leistung.

Hat die Lüftereinrichtung nur einen einzigen Lüfter, so wird dieser im Bereitschaftszustand mit einer relativ kleinen Drehzahl betrieben, während er im Betriebszustand mit voller Drehzahl betrieben wird.

Der Einfachheit halber wird nachfolgend davon ausgegangen, dass die Lüftereinrichtung nur einen einzigen Lüfter aufweist, wobei dies jedoch so zu verstehen ist, dass auch mehrere Lüfter vorhanden sein können, die in der beschriebenen Weise gesteuert werden.

Der Lüfter wird also mittels des Signals des Geruchssensors in der Weise gesteuert, dass er mit einer ersten, relativ niedrigen Leistung arbeitet, wenn das Geruchssignal keine oxidierbaren Geruchsmoleküle anzeigt, und dass er mit einer zweiten, höheren Leistung arbeitet, wenn das Geruchssignal das Vorhandensein oxidierbarer Geruchsmoleküle in der abgesaugten Luft anzeigt.

Vorzugsweise arbeitet der Lüfter im Bereitschaftszustand, d.h., wenn der Sensor keine Geruchsmoleküle feststellt, etwa mit halber Leistung, während er dann, wenn der Sensor das Vorhandensein von Geruchsmolekülen feststellt, auf volle Leistung umgeschaltet wird.

Der Stromverbrauch der erfindungsgemäßen Vorrichtung setzt sich zusammen aus dem des Lüfters mit etwa 1500 mW, dem der Steuerung von einigen wenigen mW und dem des Sensors von etwa 120 mW. Der Stromverbrauch des Sensors ist relativ hoch, da er mit einem kleinen Heizelement verbunden ist. Die Empfindlichkeit des Sensors erfordert, dass dieser auf mindestens etwa 30 °C erwärmt wird. Hinzukommt noch der Stromverbrauch der Schalteinrichtung, falls diese mittels eines piezoelektrischen Druckwandlers arbeitet. Dieser Stromverbrauch beträgt etwa 2 µW. Es wird für die Abschätzung des Stromverbrauchs davon ausgegangen, dass die Toilette 8 Mal pro Tag für Stuhlgang verwendet wird, wobei der Lüfter dann jeweils 1 Minute läuft, sowie 10 Mal nur zum Urinieren, wobei der Lüfter dann für eine Minute nur mit halber Leistung läuft. Der jährliche Stromverbrauch des Lüfters ist dann (72 Wh + 45 Wh =) 117 Wh. Für den Sensor fällt bei der angegebenen Benutzungsfrequenz ein jährlicher Stromverbrauch von 13 Wh an und gegebenenfalls für einen piezoelektrischen Druckwandler ein solcher von 0,0173 Wh. Dieser Energiebedarf von insgesamt etwa 130 Wh lässt sich durch vier Nickeleisenbatterien des Typs D (Mono-Zellen) decken.

Die Deodorisierungseinrichtung kann ein Aktivkohlefilter oder eine Ionisierungseinrichtung sein. Wenn die Deodorisierungseinrichtung eine Ionisationseinrichtung ist, so wird sie in Abhängigkeit von dem Geruchssignal des Sensors gesteuert. Sie wird eingeschaltet, wenn der Sensor das Vorhandensein oxidierbarer Geruchsmoleküle anzeigt. Außerdem kann die Leistung der Ionisierungseinrichtung in Abhängigkeit von der Amplitude des Geruchssignals des Sensors gesteuert werden. Dadurch wird erreicht, dass die von der Ionisationseinrichtung produzierte Menge an Luftionen und Ozon gerade etwa so groß ist, wie es zur Oxidation der Geruchsmoleküle notwendig ist. Die Erzeugung einer wesentlichen Menge überschüssiger Luftionen und überschüssigen Ozons und der damit verbundene beißende Geruch werden vermieden.

Der Sensor kann in Richtung der von dem Lüfter erzeugten Luftströmung vor, hinter oder neben der Ionisierungseinrichtung angeordnet sein. Wichtig ist nur, dass der Sensor innerhalb des von dem Lüfter erzeugten Luftstroms angeordnet ist, bevor dieser Luftstrom wieder in den Raum austritt. Wenn der Sensor hinter der Ionisierungseinrichtung angeordnet ist, so ist bei der Festlegung der Steuerungskurve zu berücksichtigen, dass ein Teil der oxidierbaren Geruchsmoleküle bereits aufoxidiert ist, bevor sie den Sensor erreichen konnten. Die Abhängigkeit der Leistung der Ionisierungseinrichtung von dem Sensorsignal hat dann zumindest zum Teil den Charakter einer Regelung.

Der Sensor hat dann insgesamt eine dreifache Funktion: Erstens wird die Ionisierungseinrichtung eingeschaltet, sobald der Sensor oxidierbare Geruchsmoleküle feststellt, zweitens steuert der Sensor in Abhängigkeit von der Konzentration der festgestellten Geruchsmoleküle die Leistung der Ionisierungseinrichtung, und drittens wird die Leistung des Lüfters erhöht, sobald der Sensor oxidierbare Geruchsmoleküle feststellt.

Der Sensor ist zweckmäßig ein VOC(Volatile Organic Compound - flüchtige organische Verbindung)-Sensor, vorzugsweise ein Halbleiter-Zinnoxid-Sensor, der oxidierbare Gasbestandteile in der Luft feststellt. Derartige Sensoren sind allgemein bekannt und zum Beispiel von der Firma FIS Inc., 2-5-26, Hachizuka, Ikeda, Osaka, 563-0024 Japan, erhältlich. Geeignet ist z.B. der FIS Gassensor SB-AQ1A.

Bei der Verwendung eines VOC-Sensors arbeitet die Steuerung vorzugsweise so, dass das Geruchssignal, das den Lüfter steuert, nicht aus der absoluten Höhe des Signals des VOC-Sensors abgeleitet wird, sondern aus der ersten Ableitung dieses Signals, d.h., dass das Geruchssignal von einem Ansteigen des Ausgangssignals des VOC-Sensors erzeugt wird. Es hat sich gezeigt, dass dadurch die Ansprechsicherheit verbessert wird, da der VOC-Sensor zwar z.B. auch auf die Dämpfe von Reinigungsmitteln oder Parfüms anspricht, die Konzentrationsänderungen bei derartigen "Geruchsmolekülen" wesentlich langsamer sind. Der Schwellwert des Anstiegs, d.h. der ersten Ableitung, der Kurve, die den zeitlichen Verlauf der Konzentration der oxidierbaren Geruchsmoleküle wiedergibt, bei dem das Geruchssignal zum Hochfahren des Lüfters erzeugt wird, kann experimentell ermittelt werden. Beim Erreichen des Schwellwertes wird ein Zeitgeber getriggert, der den Lüfter für eine bestimmte Zeit, z.B. 1 Minute, auf volle Leistung schaltet. Wenn der Schwellwert innerhalb dieser Zeitspanne nochmals erreicht wird, so wird der Zeitgeber nochmals getriggert. Der Lüfter wird damit auf volle Leistung geschaltet, sobald der Schwellwert erreicht wird und bleibt auf voller Leistung bis zum Ende der vorgegebenen Zeitspanne, z.B. 1 Minute nach dem Unterschreiten des Schwellwertes.

Das auf diese Weise abgeleitete Geruchs- oder Steuerungssignal für den Lüfter gibt nicht die absolute Konzentration der Geruchsmoleküle an, und das Signal ist daher nicht zur Steuerung der Leistung einer Ionisierungseinrichtung geeignet. Zweckmäßig wird daher bei dieser Ableitung des Steuerungssignals ein Aktivkohlefilter als Deodorisierungseinrichtung verwendet, oder von der Steuerung wird zusätzlich das Signal ausgegeben, das die absolute Konzentration der Geruchsmoleküle wiedergibt.

Und dieses Signal wird zur Steuerung der Leistung der Ionisierungseinrichtung verwendet.

Geeignet ist auch ein H₂-Sensor. Wasserstoff ist zwar ein geruchloses Gas, kann jedoch als Leitgas verwendet werden, da es immer bei der menschlichen Verdauung gebildet wird, während die anderen Gasbestandteile, z.B. Methan oder H₂S, in Abhängigkeit von der aufgenommenen Nahrung im größeren oder kleineren Umfang oder überhaupt nicht gebildet werden. Gleichzeitig hat Wasserstoff den Vorteil, dass es nicht in Parfums und ähnlichen Kosmetika verwendet wird, so dass ein fälschliches Ansprechen des Sensors auf derartige Kosmetika verhindert wird. Ein H₂-Sensor hat damit den Vorteil, dass er einerseits sicher anspricht, wenn irgendwelche Geruchsmoleküle oder Luftbestandteile vorhanden sind, die von der menschlichen Verdauung herrühren, und andererseits ein fälschliches Ansprechen auf z.B. Kosmetika vermieden wird. Geeignete H₂-Sensoren sind ebenfalls von der Firma FIS Inc. erhältlich (siehe Products Review, Sensors and Systems Technology, revised June, 1998, Version 4.2 der Firma Vis Inc.), z.B. das Modell SB 19. Die Verwendung eines H₂-Sensors als Sensor hat außerdem den Vorteil, dass der Lüfter nicht auf volle Leistung geschaltet wird und die Ionisierungseinrichtung nicht eingeschaltet wird, wenn der Benutzer nur uriniert. Dabei wird nämlich kein H₂-Gas gebildet.

Durch alle vorausgehend beschriebenen Maßnahmen wird es schließlich erreicht, dass der Stromverbrauch der Deodorisierungsvorrichtung so niedrig gehalten werden kann, dass eine Batterie als Stromquelle ausreicht, und bei einer normalen Benutzungsfrequenz einmal pro Jahr die Batterien gewechselt werden müssen.

Die Deodorisierungsvorrichtung ist zweckmäßig als ein kompaktes Modul (Deodorisierungsmodul-DOM) ausgebildet, das die Lüftereinrichtung, den Sensor, die Deodorisierungseinrichtung (Aktivkohlefilter oder Ionisierungseinrichtung mit Ionisierungsröhre und Hochspannungseinheit), die Steuerung und die Stromversorgung für diese Komponenten enthält. Die Stromversorgung kann über das Stromnetz mittels eines Netzteils mit einem Netztrafo erfolgen. Wie erwähnt, erfolgt die Stromversorgung jedoch vorzugsweise über eine Batterie. Das DOM ist zweckmäßig wasserdicht ausgebildet und aus einem Material hergestellt, das gegenüber den haushaltsüblichen Reinigungsmitteln mit Zitronensäure widerstandsfähig ist.

Die Steuerung der Deodorisierungsvorrichtung kann so ausgelegt werden, dass sie sowohl mit Batterien als Stromquelle als auch mittels eines Netzteils über das Stromnetz betrieben werden kann und dass sie sich in Abhängigkeit von der Stromquelle unterschiedlich verhält. Dient als Stromquelle ein Netzanschluss, so ist ein sparsamer Stromverbrauch weniger wichtig und kann die Steuerung kontinuierlich betrieben werden und auch der Sensor kontinuierlich arbeiten. Über die Schalteinrichtung wird dann nur der Lüfter geschaltet. Bei einer Batterie als Stromquelle ist dagegen ein niedriger Stromverbrauch besonders wichtig, so dass dann auch die Steuerung und damit der Geruchssensor mittels der Schalteinrichtung geschaltet werden. Die Steuerung kann z.B. über ein fünfadriges Kabel mit der Stromquelle verbunden werden, wobei unterschiedliche Adern für die Stromzuführung von einer Batterie und von einem Netzteil dienen.

Der Lüfter saugt über ein Ansaugrohr Luft an und fördert sie zu dem Sensor und der Deodorisierungseinrichtung, die ein Aktivkohlefilter oder eine Ionisierungseinrichtung sein kann.

Wenn die Deodorisierungseinrichtung ein Aktivkohlefilter ist, so ist dieser vorzugsweise mit einem basischen oder sauren Vorfilter versehen. Zur Unterdrückung von Keimen ist der Aktivkohlefilter vorzugsweise mit einem antibakteriellen Mittel, z.B. Silber, dotiert. Geeignete Aktivkohlefilter sind von der Firma CAMFIL (Schweden) erhältlich.

Wenn die Deodorisierungseinrichtung eine Ionisierungseinrichtung ist, kann die Ionisierungsröhre ein Glas-Hohlzylinder mit einem Außendurchmesser von 20 mm, einer Zylinderhöhe von 50 mm und einer Wandstärke von 0,8 mm sein. Auf der Innen- und Außenseite des Glaszylinders sind flächige, gitterförmige Elektroden angebracht. Die Enden der zylinderförmigen Röhre können offen oder verschlossen sein.

Die Hochspannungseinheit der Ionisierungseinrichtung erzeugt eine Spannung von 1 bis 1,8 kV mit einer Frequenz von 8 bis 13 kHz, bei der vorausgehend beschriebenen Ionisierungsröhre vorzugsweise eine Wechselspannung von 1,5 kV bei einer Frequenz von 10 kHz. Die Wechselspannung wird in Form von Rechteckimpulsen mit einer Frequenz z.B. im Bereich von 50 Hz an die Elektroden der Ionisationsröhre angelegt. Die Steuerung der Ionisationsleistung, d.h. der Menge der erzeugten Luftionen und der Ozonmoleküle, wird dadurch gesteuert, dass die Dauer der Rechteckimpulse und deren Abstand verändert wird (Tastverhältnis). An der Ionisationsröhre liegt damit entweder keine Spannung an oder eine bestimmte fest eingestellte Hochspannung, z.B. 1,5 kV. Wenn Ionisation stattfindet, dann erfolgt sie dadurch mit der einmal gefundenen optimalen Spannung, bei der die Menge der erzeugten Luftionen und der Ozonmoleküle pro Zeiteinheit weitgehend konstant ist. Es kann sich bisweilen das Problem ergeben, dass die Luft nach dem Durchgang durch die Ionisationseinrichtung noch einen geringen Anteil an Ozon enthält. In diesen Fällen kann es vorteilhaft sein, der Ionisationseinrichtung am Auslassende noch ein Aktivkohlefilter nachzuschalten. Da der größte Anteil der oxidierbaren Gase und des Ozons bereits vor dem Aktivkohlefilter miteinander reagiert, wird das Aktivkohlefilter wenig belastet, so dass es eine sehr hohe Standzeit hat. In bekannter Weise kann das Aktivkohlefilter z.B. durch Erhitzen regeneriert werden.

Der Lüfter kann von jeder Bauart sein, z.B. Radiallüfter, Querstromlüfter, Tangentiallüfter. Vorzugsweise ist er ein Axiallüfter. Eine maximale Leistung von etwa 60 Liter pro Minute ist im Allgemeinen ausreichend. Über das Ansaugrohr wird die Luft aus dem Inneren des WC-Beckens angesaugt und zu dem Deodorisierungsmodul geleitet. Das Ansaugrohr kann ein eigenes Rohr sein. Mit geeigneten Adaptern kann auch das Spülrohr oder das Überlaufrohr als Ansaugrohr fungieren, wie nachfolgend noch detaillierter ausgeführt wird. Die behandelte Luft wird über eine Auslassöffnung in dem Gehäuse des Deodorisierungsmoduls ausgeblasen, wobei diese Öffnung im Allgemeinen der Öffnung diametral gegenüberliegt, an der das Ansaugrohr in das Gehäuse mündet. Die behandelte Luft kann auch über ein Auslassrohr in den Raum abgeleitet werden. Dadurch wird die Zeitspanne verlängert, die zur Verfügung steht, um die oxidierbaren Geruchsmoleküle aufzuoxidieren. Die Geruchsmoleküle und die Luftionen und Ozonmoleküle sind während der Durchströmung des Auslassrohrs noch räumlich eingeschlossen, so dass sie miteinander reagieren können. Als ein solcher Reaktionsraum kann auch der Hohlraum auf der Rückseite eines WC-Beckens oder der Raum innerhalb eines Spülkastens dienen.

Die Toilettenausstattung, die ebenfalls Gegenstand der Erfindung ist, kann ein übliches WC-Becken und eine Spüleinrichtung mit einem Spülrohr aufweisen. Bei der Spüleinrichtung kann es sich insbesondere um einen Spülkasten handeln, der über das Spülrohr mit dem WC-Becken verbunden ist.

In einer ersten, besonders einfachen Ausgestaltung der erfindungsgemäßen Toilettenausstattung ist das Deodorisierungsmodul (DOM) im hinteren Bereich des WC-Beckens angeordnet, bspw. unterhalb des Abflussrohrs oder Geruchsverschlusses, wo im Allgemeinen ausreichend Platz zur Verfügung steht. Angesaugt wird die Luft aus dem Inneren des WC-Beckens über einen innerhalb des WC-Sitzes verlaufenden Kanal, der über eine Gelenkverbindung im Scharnier des WC-Sitzes mit dem Ansaugrohr des Deodorisierungsmoduls verbunden ist. In der Keramik des WC-Beckens kann eine zusätzliche, nach unten führende Öffnung im Bereich der Scharnierbefestigung vorgesehen sein. Statt über einen Kanal im WC-Sitz die Luft abzusaugen, besteht auch die Möglichkeit, eine eigene Öffnung neben dem Spülrohrauslass im oberen Bereich des WC-Beckens vorzusehen, über die die Luft abgesaugt und zum Deodorisierungsmodul geführt wird. An einem eventuell vorhandenen Spülkasten und an den Anschlüssen des Spülkastens und des Abflusses sind dann keine Veränderungen notwendig.

In einer zweiten Ausgestaltung der Erfindung ist das Deodorisierungsmodul im unteren Bereich des Spülkastens oder im hinteren Bereich des WC-Beckens neben oder unter dem WC-Abflussstutzen angeordnet und wird die Luft aus dem WC-Becken über den Spülrohrauslass abgesaugt und über eine Abzweigung aus dem Spülrohr zum Deodorisierungsmodul geleitet.

Bei dieser zweiten Ausgestaltung der Erfindung werden zweckmäßig Vorkehrungen getroffen, damit kein Wasser beim Spülen des WC über die Abzweigung zum Deodorisierungsmodul gelangt. Dazu kann zum Beispiel eine Verbindung von dem Spülrohr über ein U-Stück, das als Geruchsverschluss fungiert, zu dem WC-Abfluss vorhanden sein. Über dem Niveau des WC-Abflusses ist dann von dieser Verbindung zwischen Spülrohr und WC-Abfluss die Abzweigung zum Deodorisierungsmodul vorgesehen, die zweckmäßig zunächst etwas ansteigt.

Um das Deodorisierungsmodul vor Wasser zu schützen, kann auch ein Magnetventil oder ein rein mechanisches Ventil, zum Beispiel ein Kugelventil, ein Kippventil oder ein Torsionsventil, vorgesehen sein. Schließlich kann der Anfang der Abzweigung aus dem Spülrohr auch als Venturi-Ventil ausgebildet sein, d.h., das Einlassende der Abzweigung endet nicht stumpf an dem Spülrohr, sondern verläuft innerhalb des Spülrohrs ein kurzes Stück in Strömungsrichtung, so dass die Öffnung der Abzweigung von der Strömung des Spülwassers abgewandt ist.

Bei einer dritten Ausgestaltung der Erfindung verläuft das Ansaugrohr vom Rand des WC-Beckens innerhalb des waagerechten Teils des Spülrohrs zurück, folgt dem Spülrohr ein kurzes Stück innerhalb des senkrechten Teils, so dass kein Wasser über das Ansaugrohr zum Deodorisierungsmodul gelangen kann, und tritt dann seitlich aus dem Spülrohr aus und führt zum Deodorisierungsmodul. Der Austritt aus dem Spülrohr kann auch in den waagerechten Teil zurück verlegt sein, wozu das Ansaugrohr nach dem kurzen senkrechten Anstieg in einer U-Krümmung wieder zurück zum waagerechten Teil verläuft und dort seitlich austritt.

Bei einer vierten Ausgestaltung der Erfindung befindet sich das Deodorisierungsmodul im Spülkasten über dessen Flutungslinie. Als Ansaugrohr fungieren das Spülrohr und das Überlaufrohr, das unterhalb des Spülventils von dem Spülrohr abzweigt. Mittels eines Adapters wird das obere Ende des Überlaufrohrs in einem U-förmigen Kanal nach unten umgeleitet. Das Deodorisierungsmodul wird auf den Adapter aufgesetzt, wobei die Ansaugöffnung des Deodorisierungsmoduls in den U-förmigen Kanal mündet. Bei gefülltem Spülkasten wird Luft über das Überlaufrohr und das Spülrohr nur aus dem Inneren des WC-Beckens angesaugt, da das nach unten zeigende Ende des U-förmigen Kanals von dem im Spülkasten stehenden Wasser verschlossen ist.

Bei einer fünften Ausgestaltung der Erfindung ist das Ansaugrohr in dem Überlaufrohr und dem Spülrohr des Spülkastens nach unten geführt, wobei sich die Einlassöffnung des Ansaugrohrs im Spülkasten über dessen Flutungslinie befindet. Das Ansaugrohr tritt zwischen Spülkasten und WC-Becken aus dem Spülrohr aus und verläuft zum Deodorisierungsmodul, das sich in dem Hohlraum auf der Rückseite des WC-Beckens befindet.
Ein besonderer Vorteil dieser Ausgestaltung der Deodorisierungsvorrichtung besteht darin, dass sie in bestehende WCs eingebaut werden kann, ohne die Keramik des WC-Beckens zu verändern.

In einer sechsten Ausgestaltung der Erfindung ist das WC-Becken mit speziellen Absaugkanälen versehen, durch die die Luft aus dem Inneren des WC-Beckens abgesaugt wird. Übliche WC-Becken haben am oberen Rand einen verdeckten ringförmigen Kanal mit Austrittsöffnungen für das Spülwasser. Der ringförmige Kanal kann auch ein vollständig oder teilweise offener Spülkanal sein, statt gestochene Austrittsöffnungen zu haben.

In diesen Kanal mündet am rückwärtigen Ende des WC-Beckens ein Spülwasserstutzen, in den das Spülrohr mit einer Dichtungsmanschette eingeschoben wird. Die Absaugkanäle sind bei dieser Ausgestaltung der Erfindung an den ringförmigen Kanal angesetzt. Über den ringförmigen Kanal und die beiden davon abgehenden Absaugkanäle, die mit dem Ansaugrohr des DOM verbunden sind, wird die Luft aus dem Inneren des WC-Beckens mittels des Lüfters abgesaugt und durch das DOM geleitet.

Bei dieser Ausgestaltung der Erfindung kann das DOM als kompakte Einheit am unteren Ende der Befestigungsschraube des stationären Scharnierteils des Sitzbrettes abgehängt werden. Viele WC-Becken sind an dieser Stelle tailliert, so dass auf der einen Seite des WC-Beckens Raum für die Anordnung des DOM vorhanden ist, während auf der gegenüberliegenden Seite in dem entsprechenden Raum die Batterien für die Stromversorgung angebracht werden können. Diese werden ebenfalls an dem unten vorstehenden Ende der äußeren Hülse angehängt. Diese Anordnung des DOM bietet sich insbesondere bei der oben erwähnten Integration der Schalteinrichtung in die Befestigung des stationären Scharnierteils an, bei der dieses Scharnierteil an einer inneren Hülse befestigt ist, die in einer äußeren Hülse gleitet und durch ein Federelement abgestützt ist und bei ihrer Verschiebung die Schalteinrichtung betätigt. Das DOM kann hierbei mittels eines Sprengrings am unteren Ende der äußeren Hülse abgehängt werden.

Der Lüfter kann auch als separate Baueinheit auf der Rückseite des WC-Beckens z.B. über oder unter dem Abflussstutzen angeordnet werden. Diese Anordnung empfiehlt sich insbesondere dann, wenn ein besonders starker Lüfter eingesetzt werden soll, der mehr Platz benötigt, oder wenn zwei Lüfter eingesetzt werden. Der starke Lüfter kann dann auf der Rückseite des WC-Beckens und der schwächere Lüfter in dem DOM angeordnet werden.

Ausführungsbeispiele der Erfindung werden nachfolgend anhand der Zeichnungen näher erläutert. Es zeigen:
- Fig. 1: in einer schematischen Darstellung das Deodorisierungsmodul mit einer Ionisationseinrichtung;
- Fig. 2: die Anordnung der einzelnen Bauelemente des Deodorisierungsmoduls von Fig. 1 auf einer Platine;
- Fig. 3: und 4 ein Ausführungsbeispiel der ersten Ausgestaltung der Erfindung;
- Fig. 5: bis 9 verschiedene Ausführungsbeispiele der zweiten Ausgestaltung der Erfindung;
- Fig. 10: ein Ausführungsbeispiel der dritten Ausgestaltung der Erfindung;
- Fig. 11: ein Ausführungsbeispiel der vierten Ausgestaltung der Erfindung;
- Fig. 12: und 13 ein Ausführungsbeispiel der fünften Ausgestaltung der Erfindung;
- Fig. 14: bis 16 das elektromagnetische Ventil zum Verhindern des Vordringens von Wasser zum Deodorisierungsmodul;
- Fig. 17: im Schnitt das Venturi-Ventil am Anfang der Abzweigung des Ansaugrohres;
- Fig. 18: das Kugel-Ventil am Anfang des Ansaugrohres;
- Fig. 19: und 20 das Kipp-Ventil am Anfang des Ansaugrohres;
- Fig. 21: das Torsions-Ventil am Anfang des Absaugrohres;
- Fig. 22: ein Ausführungsbeispiel der sechsten Ausgestaltung der Erfindung mit dem WC-Becken von oben;
- Fig. 23: das WC-Becken von Fig. 22 im Längsschnitt, wobei das Ende des Spülwasserstutzens weggebrochen ist;
- Fig. 24: das WC-Becken von Fig. 22 in einer Ansicht von hinten;
- Fig. 25: und 26 im Schnitt bzw. in einer Explosionsdarstellung die Befestigungseinrichtung des stationären Teils des Sitzbrettes mit der Schalteinrichtung;
- Fig. 27: eine Explosionsdarstellung des Deodorisierungsmoduls des sechsten Ausführungsbeispiels.

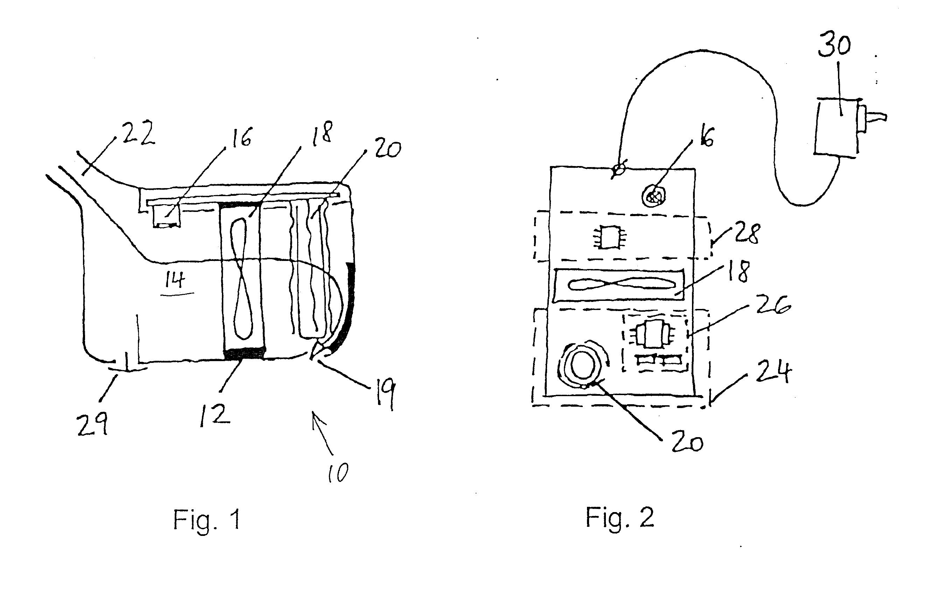

Wie in Fig. 1 gezeigt, ist das Deodorisierungsmodul (DOM) 10 in einem kompakten Gehäuse 12 untergebracht, durch das ein Strömungskanal 14 verläuft, in dem in Strömungsrichtung hintereinander ein Sensor 16, ein Lüfter 18 und eine Ionisationsröhre 20 angeordnet sind. Der Lüfter 18 kann auch an jeder anderen Stelle innerhalb des Strömungskanals 14 angeordnet sein. Er saugt Luft über ein Ansaugrohr 22 an, treibt sie durch den Strömungskanal 14 und bläst sie nach der Behandlung über eine Auslassöffnung 19 wieder in die Umgebung aus. Die Ionisationsröhre 20 ist Teil einer Ionisationseinrichtung 24 (Fig. 2), die noch eine Hochspannungseinheit 26 aufweist. Eine Steuereinheit 28 verarbeitet die Signale des Sensors 16 und steuert die Ionisationseinrichtung 24 in Abhängigkeit von den Sensorsignalen. Die Stromversorgung aller Komponenten erfolgt über ein Netzteil 30 in einem Netzstecker mit einer Ausgangsspannung von 12 Volt. Die Reihenfolge von Sensor 16, Lüfter 18 und Ionisationsröhre 20 ist dabei beliebig. Der Sensor 16, die Steuereinheit 28, der Lüfter 18, die Ionisationsröhre 20 und die Hochspannungseinheit 26 sind alle auf der gleichen Seite einer gemeinsamen Platine 32 montiert. Die Platine 32 ist oben in dem Gehäuse 12 befestigt, wobei die Montageseite mit den einzelnen Komponenten nach unten zeigt. Der Lüfter 18 füllt dabei den gesamten Querschnitt des Gehäuses 12 aus, und auch die Ionisationsröhre 20 erstreckt sich bis nahe zur Unterseite des Gehäuses 12 (Fig. 1). Das Ansaugrohr 22 mündet auf der in Fig. 1 linken oberen Kante in das Gehäuse 12, und die Auslassöffnung 19 befindet sich an der rechten unteren Kante. Das DOM 10 hat an der Unterseite ein Notventil 29, über das eventuell eintretendes Wasser abgelassen wird. Das Notventil 29 ist als Pilzventil ausgeführt und öffnet bereits bei geringem Wasserdruck. Wie nachfolgend noch erläutert wird, sind die Mittel zum Ansaugen der Luft aus dem Beckeninneren jedoch so ausgelegt, dass kein Wasser in das DOM 10 eintreten kann.

Der Sensor 16 ist typischerweise ein Halbleiter-Zinnoxid-Sensor, der oxidierbare Gasbestandteile in der Luft feststellt. Der elektrische Widerstand des Sensors 16 ändert sich in Abhängigkeit von der Konzentration der oxidierbaren Luftbestandteile, die sich in der Luft befinden, die an den frei liegenden Oberflächen des Sensors 16 vorbei strömt.

Die Ionisationsröhre 20 besteht aus einem Glas- oder Keramikzylinder mit zwei Elektroden auf der Innenseite und der Außenseite. Die Hochspannungseinheit 26 erzeugt eine elektrische Wechselspannung von 1,5 kV und 10 kHz, und diese Wechselspannung wird an die beiden Elektroden angelegt, wodurch Luftionen und aktiver Sauerstoff nach dem Prinzip der stillen oder dielektrisch behinderten Entladung erzeugt werden. Die Ionisationseinrichtung arbeitet im Impulsbetrieb, d.h. die Hochspannungseinheit 26 erzeugt eine Hochspannung in Form einer Folge von Rechteck-Hochspannungsimpulsen. Dadurch wird erreicht, dass die Ionisationseinrichtung 24 immer mit der optimalen Spannung betrieben wird, bei der stabil und reproduzierbar überwiegend Luftionen und nur ein geringer Anteil an aktiven Sauerstoffatomen erzeugt werden.

Die Steuereinheit 28 steuert das DOM 10 in der Weise, dass im Bereitschaftszustand, d.h., wenn der Sensor 16 kein Signal abgibt, das auf das Vorhandensein von oxidierbaren Luftbestandteilen hinweist, der Lüfter 18 etwa mit seiner halben Nennleistung läuft und die Ionisationseinrichtung 24 stromlos ist. Sobald der Sensor 16 meldet, dass oxidierbare Luftbestandteile in der angesaugten Luft vorhanden sind, wird der Lüfter 18 auf volle Leistung geschaltet und wird die Ionisationseinrichtung 24 eingeschaltet, wobei die Leistung der Ionisationseinrichtung 24 in Abhängigkeit von der Menge der oxidierbaren Luftbestandteile gesteuert wird. Die Steuereinheit 28 steuert die Leistung der Ionisationseinrichtung 24 durch Verändern der Impulsdauer und/oder der Impulsabstände, wobei die Maximal-Spannung jedes Impulses im Wesentlichen konstant bei etwa 1,5 kV liegt. Die Steuerung der Ionisationsleistung erfolgt in Abhängigkeit von dem Widerstandswert des Sensors 16 mit dem Ziel, gerade die Menge an Luftionen und Sauerstoffatomen zu erzeugen, die notwendig ist, um die oxidierbaren Luftbestandteile zu oxidieren und damit zu zerstören. Die Sauerstoffatome führen zur Bildung von Ozon. Überschüssige Sauerstoffatome würden als beißender Ozongeruch wahrgenommen.

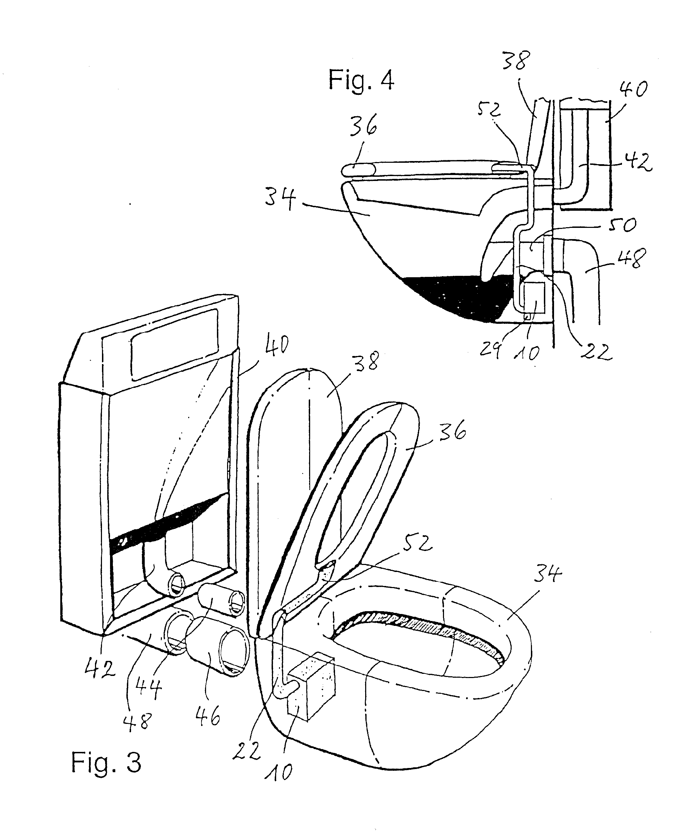

Die Figuren 3 bis 15 zeigen jeweils eine Toilettenausstattung mit einem WC-Becken 34, an dem ein Sitzbrett 36 und ein Deckel 38 in üblicher Weise mittels eines Scharniers befestigt sind. Die Toilette weist ferner einen Spülkasten 40 mit einem Spülrohr 42 auf, das in mehreren Auslassöffnungen am Rand des WC-Beckens 34 endet. Das Spühlrohr 42 kann zweiteilig sein und ein senkrechtes Fallrohr und ein waagerechtes Verbindungsstück 44 aufweisen. Die Entleerung des WC-Beckens 34 erfolgt über ein Abflussrohr 48, das an einem Abflussstutzen 50 des WC-Beckens 34 angesetzt ist. Ein Abflussverbindungsstück 46 kann dazwischen gesetzt sein. Der Spülkasten 40 weist die üblichen Bedienungsarmaturen auf, die in den Figuren jedoch nicht dargestellt sind. Das Gehäuse 12 des DOM 10 kann insgesamt ein im Wesentlichen rechtwinkliger Körper mit einer maximalen Seitenlänge von etwa 100 mm sein, wobei jeweils das Ansaugrohr 22 den unterschiedlichen Verhältnissen angepasst wird.

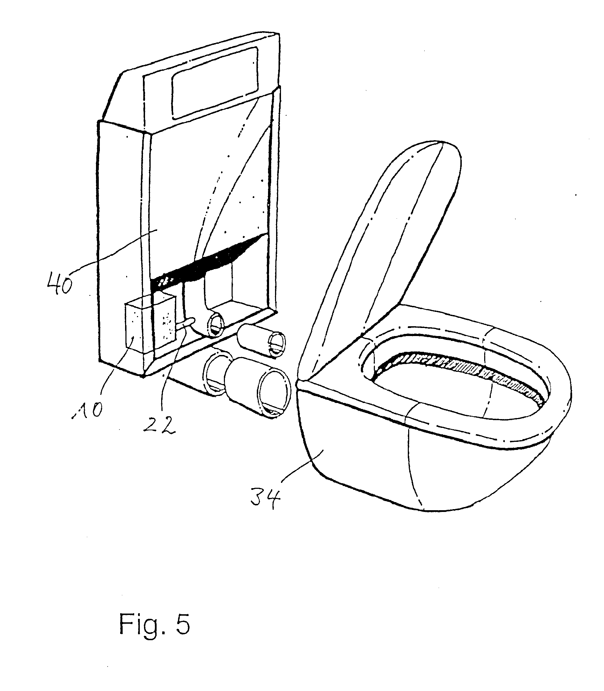

Bei der in Fig. 3 und 4 gezeigten ersten Ausgestaltung der Erfindung wird die Luft über einen im Sitzbrett 36 verlaufenden Kanal 52 angesaugt. Die Einlassöffnung des Kanals 52 befindet sich am hinteren Ende der Öffnung des Sitzbrettes 36. Der Kanal 52 kann sich auch in eine Vielzahl von kleineren Kanälen auffächern, deren Einlassöffnungen über den Rand der Öffnung des Sitzbrettes 36 verteilt sind. Der Kanal 52 mündet über ein Drehrohrgelenk in das Ansaugrohr 22, das zum DOM 10 führt, das in einem Hohlraum im hinteren Bereich des WC-Beckens 34 angeordnet ist. Handelsübliche WC-Becken haben im hinteren Bereich über oder unter dem Abflussstutzen 50 einen geeigneten Hohlraum für die Unterbringung des DOM 10. Bei dieser Ausgestaltung der Erfindung erfolgt der Anschluss des WC-Beckens 34 an den Spülkasten 40 und das Abflussrohr 48 mittels üblicher Verbindungsteile und Manschetten.

Bei dem in Fig. 5 dargestellten Ausführungsbeispiel der zweiten Ausgestaltung der Erfindung ist das Ansaugrohr 22 an der Stelle des Spülrohrs 42 angesetzt, an der dieses aus der Waagerechten nach oben abbiegt. Das Ansaugrohr 22 kann dabei stumpf mit dem Spülrohr 42 verbunden sein oder kann sich innerhalb des Spülrohrs 42 ganz oder teilweise bis zum WC-Becken 34 erstrecken. Das DOM 10 befindet sich unten im Spülkasten 40.

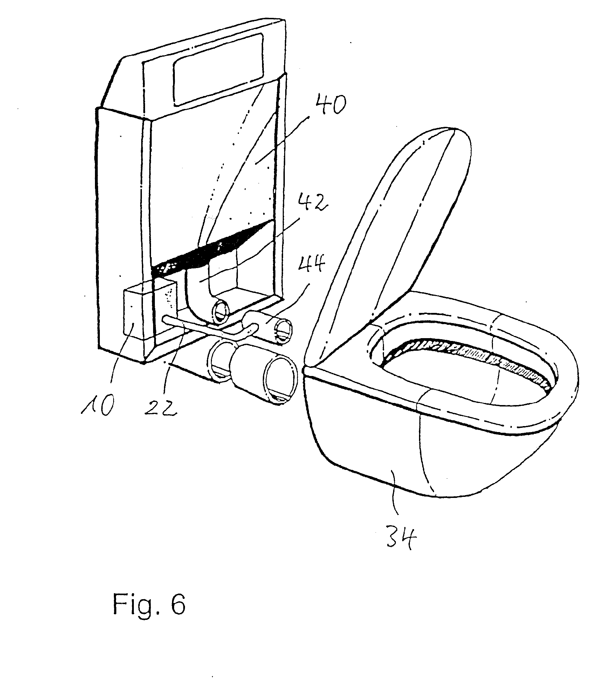

Bei der in Fig. 6 gezeigten Variante der zweiten Ausgestaltung ist der Anschluss des Ansaugrohrs 22 in Richtung WC-Becken 34 versetzt, und zwar mündet das Ansaugrohr 22 in das Verbindungsstück 44 des Spülrohrs 42 zum WC-Becken 34.

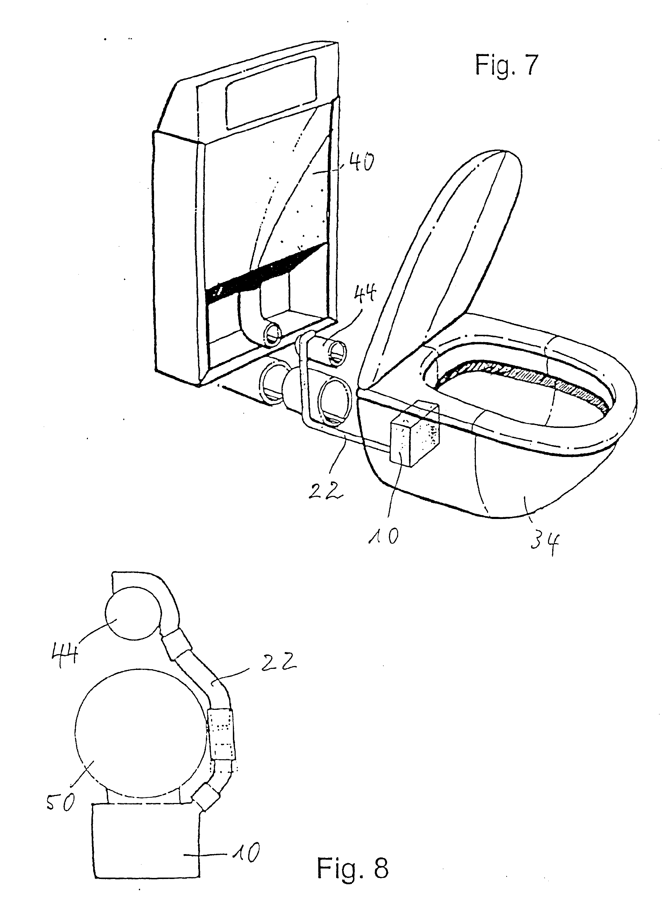

Bei der in Fig. 7 und 8 gezeigten Variante ist das Ansaugrohr 22 ebenfalls an das Verbindungsstück 44 angesetzt. Das DOM 10 wird mittels einer Manschette am Abflussstutzen 50 des WC-Beckens 34 abgehängt. Das Ansaugrohr 22 führt von der Oberseite des Verbindungsstücks 44 am Abflussstutzen 50 vorbei und mündet schräg von oben in das DOM 10 (Fig. 8). Ein Vorteil dieser Variante besteht darin, dass am Spülkasten 40 und der Keramik des WC-Beckens 34 keinerlei Änderungen erforderlich sind.

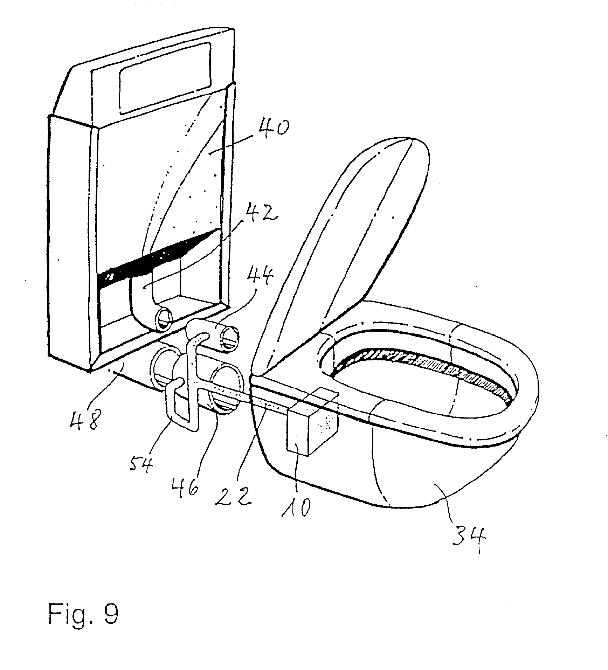

Bei der in Fig. 9 gezeigten Variante verbindet ein Verbindungsrohr 54 das Verbindungsstück 44 des Spülrohrs 42 mit dem Abflussrohr 48 oder dem Abflussverbindungsstück 46. Das Verbindungsrohr 54 ist dabei zunächst nach unten und dann wieder nach oben geführt, so dass ein Geruchsverschluss gebildet wird. Von diesem Verbindungsrohr 54 zweigt oberhalb des Niveaus des Abflussrohrs 48 das Ansaugrohr 22 ab und führt zum DOM 10. Durch das Verbindungsrohr 54 wird Wasser, das aus dem Spülrohr 42 oder dem Verbindungsstück 44 in das Verbindungsrohr 54 austritt, direkt in das Abflussrohr 48 abgeleitet, so dass es nicht den DOM 10 erreichen kann.

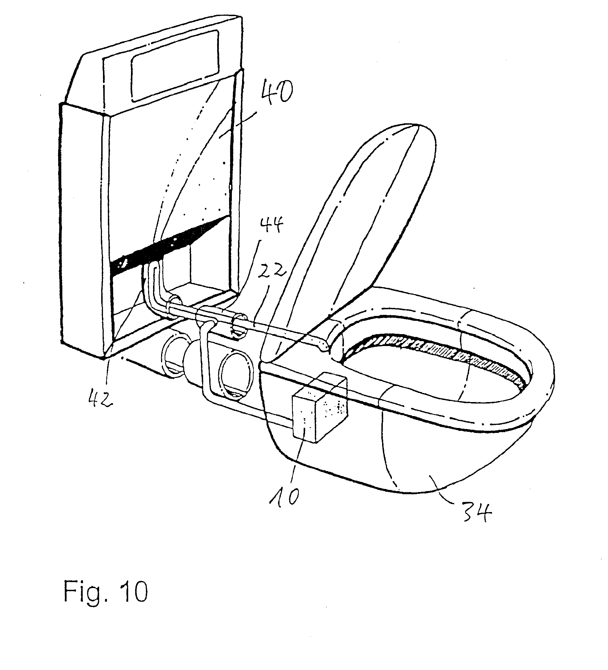

Eine andere Möglichkeit, das DOM 10 vor Wasser zu schützen, ist bei der dritten Ausgestaltung der Erfindung realisiert, die in Fig. 10 gezeigt ist. Das Einlassende des Ansaugrohrs 22 befindet sich am Rand des WC-Beckens 34. Das Ansaugrohr 22 verläuft von dort innerhalb des waagerechten Verbindungsstücks 44 und von dort ein Stück in den senkrechten Abschnitt des Spülrohrs 42 , kehrt dann nach unten um, tritt aus dem Verbindungsstück 44 seitlich aus und erreicht schließlich das DOM 10, das hierbei wiederum im hinteren Bereich des WC-Beckens 34 eingebaut ist. Der höchste Punkt des Ansaugrohrs 22, das ist die Umkehrschleife im senkrechten Abschnitt des Spülrohrs 42, liegt höher als der Rand des WC-Beckens 34, damit auch bei einem Überlauf des WC-Beckens 34 kein Wasser über das Ansaugrohr 22 zu dem DOM 10 fließt.

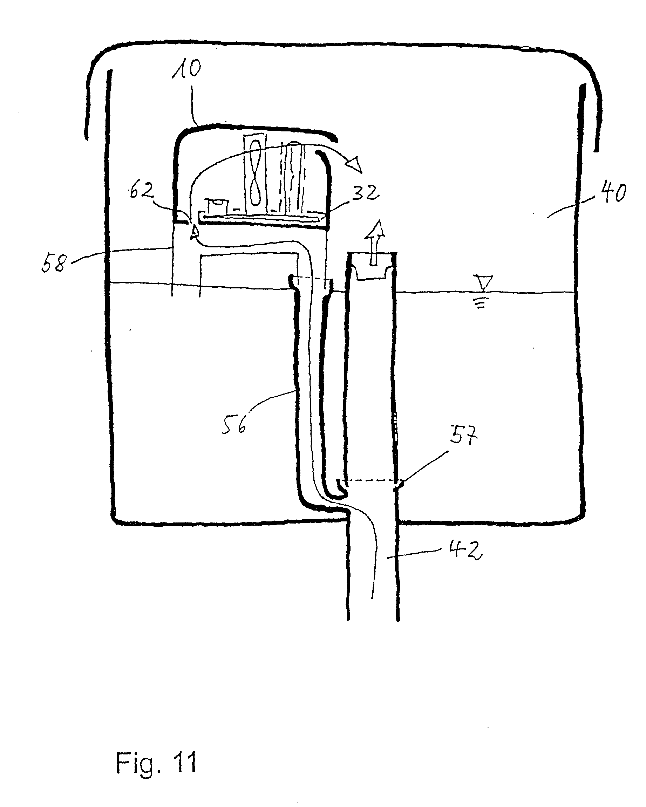

Bei der vierten Ausgestaltung der Erfindung, die in Fig. 11 gezeigt ist, ist das DOM 10 im oberen Bereich des Spülkastens 40 eingebaut. Bei dieser Bauart des Spülkastens ist ein Überlaufrohr 56 vorgesehen, das unterhalb des Spülventils 57 von dem Spülrohr 42 abzweigt und nach oben geführt ist. Zur Anordnung des DOM 10 ist auf das obere Ende des Überlaufrohrs 56 ein Adapter 58 aufgesetzt, in dem ein U-förmiger Kanal verläuft, so dass das obere Ende des Überlaufrohrs 56 nach unten umgeleitet wird. Durch den Adapter 58 behält das Überlaufrohr 56 seine Funktion bei. Bei einem drohenden Überlauf steigt das Wasser zunächst in dem freien Schenkel des U-förmigen Kanals hoch und fließt dann über das Überlaufrohr 56 ab. Der freie Schenkel ist soweit nach unten geführt, dass seine Öffnung bei normaler Füllhöhe des Spülkastens 40 in das Wasser eintaucht. Auf der Oberseite des Adapters 58 ist eine Öffnung 62 vorgesehen, und das DOM 10 wird so auf den Adapter 58 aufgesetzt, dass durch die Öffnung 62 die Luft angesaugt wird. Aus dem Inneren des WC-Beckens 34 wird die Luft somit über das Spülrohr 42, das Überlaufrohr 56 und den damit verbundenen Schenkel des U-förmigen Kanals des Adapters 58 und durch die Öffnung 62 hindurch angesaugt. Während der Toilettenspülung kann keine Luft aus dem Inneren des WC-Beckens 34 angesaugt werden. Wenn überschüssiges Wasser über den Adapter 58, das Überlaufrohr 56 und das Spülrohr 42 abfließt, hängt es von der Menge des abfließenden Wassers ab, ob noch ein freier Querschnitt innerhalb dieser Rohre für das in Gegenrichtung erfolgende Absaugen von Luft aus dem Inneren des WC-Beckens 34 vorhanden ist. Das DOM 10 wird bei dieser Ausführungsform im Allgemeinen so auf den Adapter 58 aufgesetzt, dass sich die Platine 32 im unteren Bereich des Gehäuses 10 befindet.

Sobald der Wasserspiegel beim Spülen soweit abgesunken ist, dass der freie Schenkel des U-förmigen Kanals des Adapters 58 nicht mehr ins Wasser eintaucht, so wird durch diesen Schenkel Luft angesaugt, die dann jedoch nicht aus dem Inneren des WC-Beckens 34 kommt.

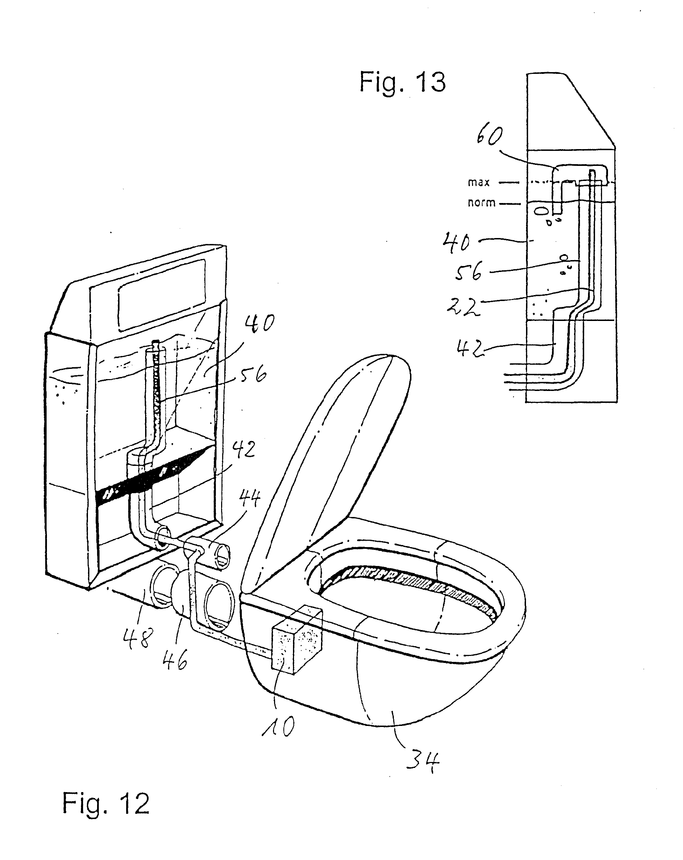

Eine fünfte Ausgestaltung der Erfindung ist in den Figuren 12 und 13 gezeigt. Der Spülkasten 40 mit dem Spülrohr 42 und dem Überlaufrohr 56 ist so wie bei der vierten Ausgestaltung der Erfindung ausgebildet. Das Ansaugrohr 22 verläuft jedoch innerhalb des Überlaufrohrs 56, und dann weiter im Spülrohr 42, tritt aus dessen Verbindungsstück 44 seitlich aus und führt zum DOM 10, das wiederum mittels einer Manschette vom Abflussrohr 48 abgehängt ist. Das Einlassende des Ansaugrohrs 22 steht nach oben aus dem Überlaufrohr 56 vor. Um zu verhindern, dass das Ansaugrohr 22 Luft aus dem Spülkasten 40 ansaugt, ist auf das Überlaufrohr 56 ein U-Stück 60 aufgesetzt, das, ähnlich dem Adapter 58 der vierten Ausgestaltung der Erfindung, ausgebildet ist, jedoch keine Öffnung 62 an der Oberseite aufweist. Bei normaler Füllung des Spülkastens 40 ist das obere Ende des Überlaufrohrs 56 für Lufteintritt aus dem Spülkasten 40 verschlossen, so dass das Ansaugrohr 22 bei vollem Spülkasten Luft nur über das Überlaufrohr 56 und das Spülrohr 42 aus dem Inneren des WC-Beckens 34 ansaugen kann.

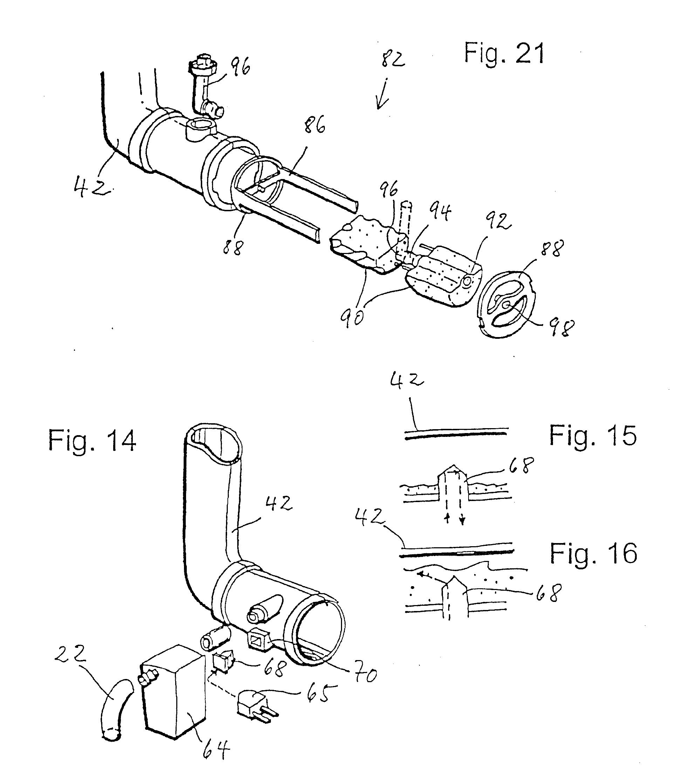

Die Figuren 14 bis 16 zeigen eine elektromagnetische Ventileinrichtung und deren Funktionsweise, wobei das elektromagnetische Ventil an der Verbindungsstelle zwischen Spülrohr 42 und Ansaugrohr 22 eingesetzt wird, um die Verbindung zwischen beiden Rohren beim Spülen der Toilette zu schließen, so dass kein Wasser aus dem Spülrohr 42 in das Ansaugrohr 22 eintreten kann. Die elektromagnetische Ventileinrichtung weist ein Ventil 64 auf, sowie einen Wassersensor 65. Das Ventil 64 ist von der üblichen Bauart eines elektromagnetischen Ventils und enthält ein Solenoid. Der Wassersensor 65 weist einen Strahler und Empfänger auf, die in einer Einheit kombiniert sind. Die Einheit ist über ein zweiadriges Lichtleiterkabel mit einem Prisma-Element 68 verbunden. Wenn sich das Prisma-Element 68 in Luft befindet (Fig. 15), so wird der von dem Strahler über das Kabel zugeführte Lichtstrahl totalreflektiert und zum Empfänger zurückgeschickt. Befindet sich das Prisma-Element 68 jedoch in Wasser (Fig. 16), so tritt keine Totalreflexion auf, so dass der Empfänger kein Licht erhält. Das Prisma-Element 68 wird über eine Durchführung 70 in das Spülrohr 42 eingesetzt. Über eine Steuereinheit wird das Signal des Empfängers so umgesetzt, dass das Ventil 64 nur dann öffnet, wenn sich im Spülrohr 42 kein Wasser befindet. Diese elektromagnetische Ventileinrichtung kann bei der zweiten und dritten Ausgestaltung der Erfindung gemäß den Figuren 2 bis 8 eingesetzt werden.

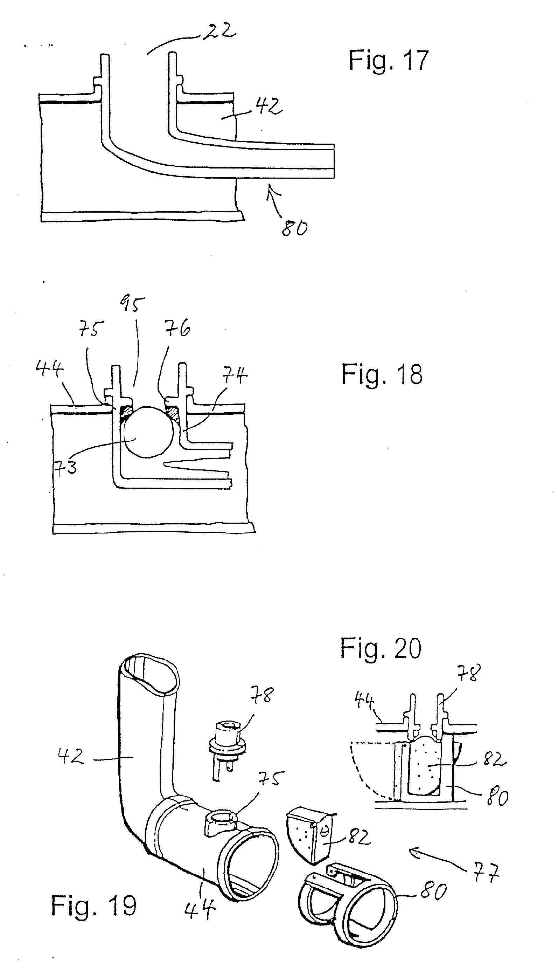

Figur 17 zeigt ein Venturi-Ventil 80, das eine mechanisch besonders einfache Lösung dafür darstellt, den Eintritt von Wasser in das Ansaugrohr 22 zu verhindern. Das Einlassende des Ansaugrohrs 22 ist dazu im Spülrohr 42 ein Stück in Strömungsrichtung des Spülwassers geführt. Beim Auslösen des Spülvorgangs entsteht dadurch im Ansaugrohr 22 ein Unterdruck, durch den eventuell vorhandenes Wasser oder Kondenswasser abgesaugt wird.

Fig. 18 zeigt ein Kugel-Ventil, das denselben Zweck erfüllt. Eine Kugel 73, die ein geringeres spezifisches Gewicht als Wasser hat, bewegt sich dabei innerhalb einer Fassung 74 frei.

Das Kugelventil 72 ist auf der Oberseite des Verbindungsstücks 44 in einen Stutzen 75 eingesetzt. Wenn sich im Spülrohr 42 Wasser befindet, so schwimmt die Kugel 73 auf dem Wasser und drückt dadurch dichtend nach oben gegen eine Schulter 76 innerhalb der Fassung 74. Oberhalb der Schulter 76 befindet sich eine Kompensationskammer 95. Die Kompensationskammer 95 kann eine geringe Menge Wasser aufnehmen, die beim Spülen ggf. durch das Kugel-Ventil hindurchtritt. Ähnlich wie bei dem Venturi-Ventil 80 ist der sich innerhalb des Spülrohrs 42 befindende Teil der Fassung 74 in Strömungsrichtung des Spülwassers umgebogen, wobei allerdings bei dem Kugelventil 72 dieser Teil seitlich geschlitzt ist, damit die Kugel 73 mit dem Wasser in Berührung kommt.

Fig. 19 und 20 zeigen ein Kippventil 77. Das Kippventil 77 weist eine Ventilaufnahme 78 auf, die in den Anschlussstutzen 75 am Verbindungsstück 44 eingesetzt wird. Die Ventilaufnahme 78 endet unten in einer ringförmigen Dichtungsfläche. In das Verbindungsstück 44 wird ein Führungskäfig 80 eingeschoben, in dem ein torten- oder käsestückähnlicher Schwimmer 82 pendelnd aufgehängt ist, wobei die Pendelachse an der Spitze liegt, d.h. die Mittelachse der gedachten Torte ist. Der Schwimmer 82 ist im Inneren inhomogen aufgebaut, so dass sein Schwerpunkt nahe der Schnittfläche liegt, die von der Spülströmung abgewandt ist. Im Ruhezustand, d.h., wenn sich kein Wasser im Spülrohr 42 befindet, nimmt der Schwimmer daher die in Fig. 20 gestrichelt eingezeichnete Position ein, wobei die Öffnung der Ventilaufnahme 78 frei liegt. Wenn Spülwasser durch das Spülrohr 42 und das Verbindungsstück 44 strömt, so drückt das Wasser den Schwimmer 82 in die Position, die in Fig. 20 durchgezogen gezeichnet ist. In dieser Position verschließt der Schwimmer 82 die Öffnung der Ventilaufnahme 78. Damit der Schwimmer 82 sicher an der Öffnung der Ventilaufnahme anliegt, kann er an der Stelle, die im geschlossenen Zustand innerhalb der Öffnung der Ventilaufnahme 78 liegt, eine ballige Erhebung aufweisen.

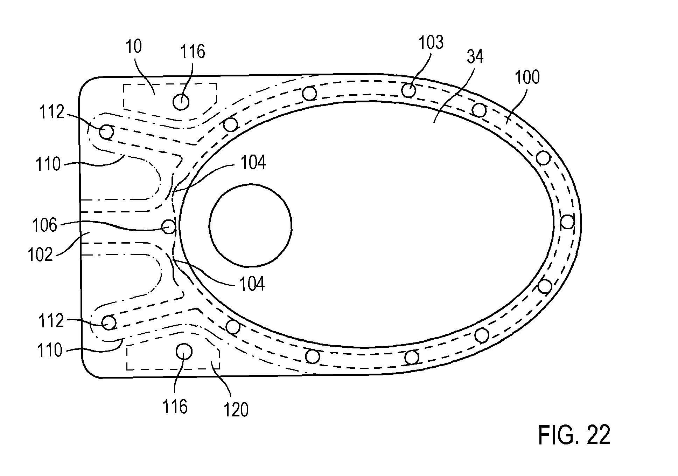

Figur 21 zeigt ein Torsionsventil 84. Das Torsionsventil weist einen rechteckigen Rahmen 86 auf, der in das Spülrohr 42 eingesetzt wird und am vorderen und hinteren Ende ringförmige Abstützungen 88 aufweist. Ein zweiteiliger Schwimmer 90 ist in dem Rahmen 86 drehbar gelagert, wobei die Drehachse mit der Längsachse des Spülrohrs 42 zusammenfällt. Die beiden Teile des Schwimmers sind Halbzylinder, und in dem hinsichtlich der Spülströmung stromabwärts liegenden Halbzylinder ist ein zur Drehachse koaxialer Kanal 92 vorgesehen. An dem zwischen den beiden Teilen des Schwimmers liegenden Ende des Kanals 92 ist ein flexibles Gummirohr 94 angeschlossen, das mit einem Winkelstück 96 verbunden ist, das wiederum nach oben aus dem Spülrohr 42 herausgeführt ist und mit dem Ansaugrohr 22 verbunden wird. Die beiden Teile des Schwimmers 90 werden soweit zusammengesteckt, dass das Gummirohr 94 zwischen ihnen noch herausgeführt werden kann. Am stromabseitigen Ende ist der Schwimmer 90 so gelagert, dass eine axiale Öffnung 98 frei bleibt. Durch diese Öffnung 98, den Kanal 92, das Gummirohr 94 und das Winkelstück 96 besteht damit ein freier Kanal, der sich im Ansaugrohr 22 fortsetzt. Wenn sich im Spülrohr 42 kein Wasser befindet, so dreht sich der Schwimmer 90 durch sein Gewicht nach unten. Das Gummirohr 94 ist so eingesetzt, dass es dann faltenfrei ist. Beim Spülen dreht sich der Schwimmer 90 durch seinen Auftrieb um 180° nach oben. Das Gummirohr 94 wird dadurch verdrillt, so dass es den Durchgang blockiert und dann keine Luft mehr durch das Ansaugrohr 22 angesaugt werden kann. Der stromaufwärtige Teil des Schwimmers 90 hat wendelförmige Rillen oder Stege auf seiner halbzylindrischen Oberfläche, wodurch die Drehrichtung festgelegt wird, in der sich der Schwimmer 90 um seine Längsachse nach oben dreht. Die Steckverbindung zwischen den beiden Teilen des Schwimmers 90 ist so ausgebildet, dass diese Drehung nicht behindert wird, d.h. die Steckverbindungselemente sind auf den Viertelkreis beschränkt, der sich bei der Drehung zunächst nach unten dreht.

Statt des Gummirohrs 94 können auch zwei halbkreisförmige Blenden gegeneinander verdreht werden. Bspw. kann die Öffnung 98 halbkreisförmig sein und der Kanal 92 oder zumindest sein Anfang ebenfalls halbkreisförmig sein. Die halbkreisförmigen Öffnungen sind dabei so angeordnet, dass sie fluchten, wenn sich der Schwimmer 90 in seiner unteren Lage befindet, so dass eine freie Verbindung besteht. Befindet sich der Schwimmer in seiner oberen Lage, so sind die halbkreisförmigen Öffnungen um 180° gegeneinander verdreht, so dass die Verbindung blockiert ist.

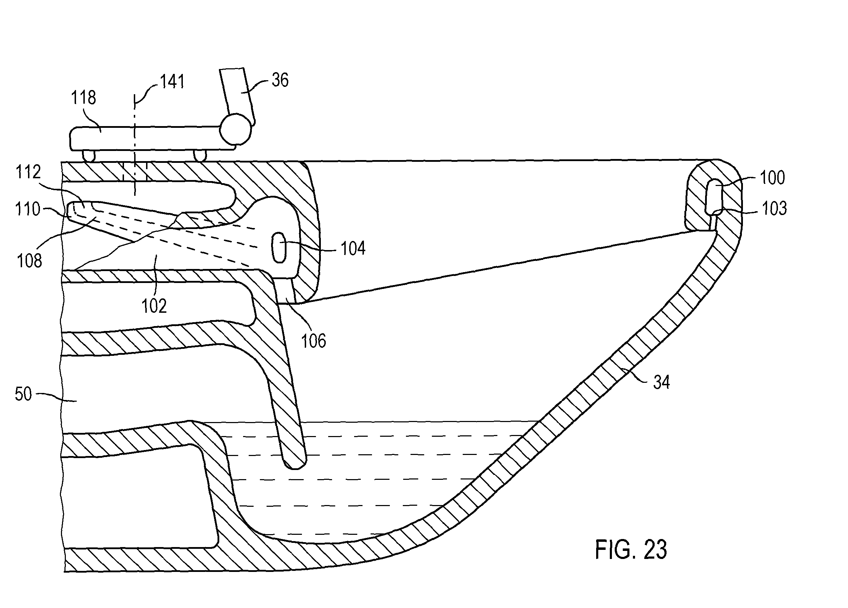

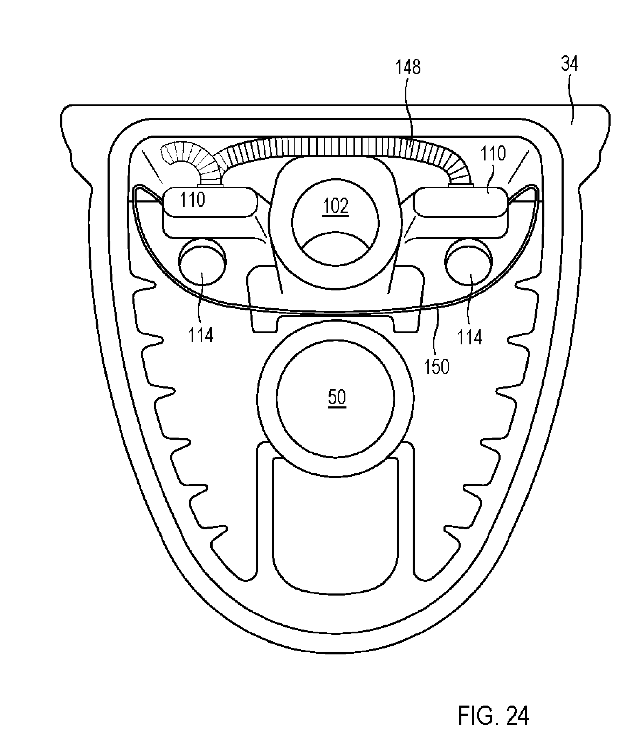

Die Fig. 22 bis 25 zeigen ein sechstes Ausführungsbeispiel der Erfindung. Das WC-Becken 34 ist wie üblich am oberen Beckenrand mit einem verdeckten ringförmigen Kanal 100 versehen. Über einen Spülwasserstutzen 102 wird dem Kanal 100 das Spülwasser zugeleitet, das dann aus Öffnungen 103 in dem ringförmigen Kanal ausströmt. Zwischen dem Spülwasserstutzen 102 und dem ringförmigen Kanal 100 sind zwei Verengungen 104 vorgesehen, durch die das Spülwasser in beide Arme des ringförmigen Kanals 100 strömt. Über eine dritte Öffnung 106 des Spülwasserstutzens 102 strömt ein Teil des Spülwassers auch direkt in das WC-Becken. Der Querschnitt der drei Öffnungen 104, 106 ist so bemessen, dass im Wesentlichen der gesamte Druckabfall des Spülwassers an ihnen stattfindet, so dass das im ringförmigen Kanal 100 fließende Wasser praktisch drucklos ist. Unmittelbar nach den Verengungen 104 führen jeweils Absaugkanäle 108 von dem ringförmigen Kanal 100 nach hinten. Die Absaugkanäle 108 steigen leicht an, so dass beim Spülen eintretendes Wasser wieder zum Kanal 100 und in das WC-Becken abfließt. Die Absaugkanäle 108 verlaufen in den in Fig. 24 erkennbaren Hörnern 110. Am hinteren Ende der Hörner 110 sind auf der Oberseite Öffnungen 112 vorgesehen, an die ein sich am einen Ende verzweigendes Ansaugrohr 22 angeschlossen wird, dessen anderes Ende zum DOM 10 führt. Da das Spülwasser in dem ringförmigen Kanal 100 praktisch drucklos ist, die Absaugkanäle 108 nach hinten ansteigen und das Ansaugrohr 22 von den Hörnern 110 nach oben wegführt, besteht nicht die Gefahr, dass Spülwasser in das DOM eintritt.

In Fig. 24 sind ferner der Abflussstutzen 50 und die beiden Öffnungen 114 für die Wandmontage des WC-Beckens 34 erkennbar. Die Oberseite des WC-Beckens 34 hat im hinteren Bereich etwa gleichbleibende Breite, und in der Oberseite sind zwei Öffnungen 116 zur Befestigung des stationären Scharnierteils 118 des Sitzbrettes 36 vorgesehen. Unter der Oberseite ist das WC-Becken 34 im hinteren Bereich seitlich tailliert, und die Öffnungen 116 für die Sitzbrettmontage befinden sich über diesem taillierten Bereich. Auf der einen Seite des taillierten Bereiches befindet sich das DOM 10 und auf der anderen Seite ein Batteriegehäuse 120.

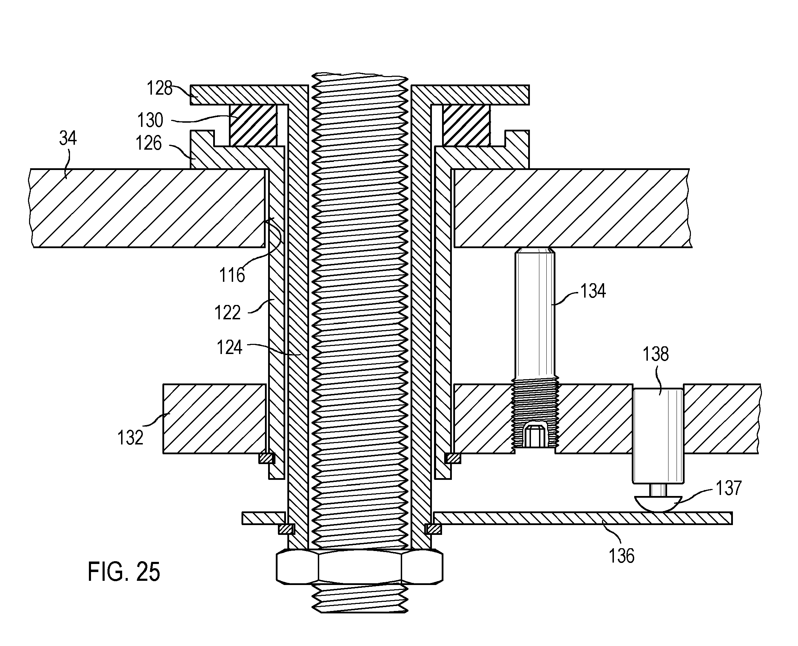

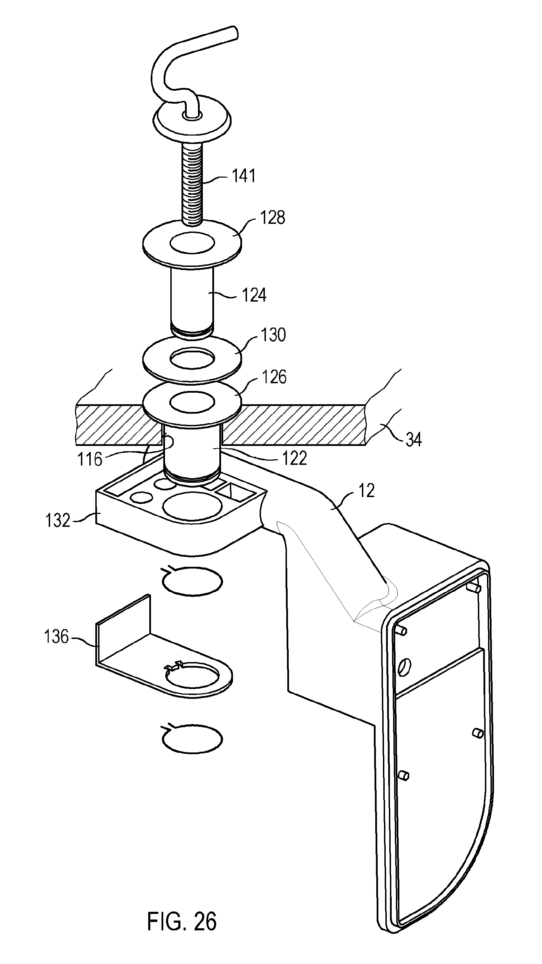

Fig. 25 und 26 zeigen die Integration der Schalteinrichtung in die Mittel zur Befestigung des stationären Scharnierteils 118. In die Öffnung 116 ist eine äußere und eine innere Hülse 122, 124 eingesetzt, die an ihrem oberen Ende jeweils einen nach außen gerichteten, ringförmigen Flansch 126, 128 haben. Der Flansch 126 der äußeren Hülse 122 liegt auf der Oberseite des WC-Beckens 34 auf, und zwischen den beiden Flanschen 126, 128 ist ein Federelement 130 in Form eines O-Rings aus elastomerem Material mit etwa quadratischem Querschnitt eingefügt. Die innere Hülse 124 kann in der äußeren Hülse 122 vertikal gleiten, wobei sich die innere Hülse 124 mit ihrem Flansch 128 auf dem Federelement 130 abstützt. An dem unten vorstehenden Ende der äußeren Hülse 122 ist mittels eines Sprengrings eine Halterungsplatte 132 gehalten, die mittels einer Einstellschraube 134 gegen die Unterseite des WC-Beckens 34 gespannt ist, so dass sie vertikal fixiert ist. Die innere Hülse 124 steht unten etwas über die äußere Hülse 122 vor, und mittels eines Sprengrings ist dort ein Hebel 136 befestigt, der den Tastknopf 137 eines Mikroschalters betätigt, der die Schalteinrichtung 138 darstellt. Der Mikroschalter ist in der Halterungsplatte 132 befestigt. Die Befestigungsschraube 141 für den stationären Teil 118 des Sitzbrettscharniers ist durch die innere Hülse 124 geführt und gegen das untere Ende der inneren Hülse gespannt. Wenn sich der Benutzer der Toilette auf das Sitzbrett setzt, so wird durch sein Gewicht das Federelement 130 komprimiert und die innere Hülse 124 etwas nach unten gedrückt. Der Hebel 136 löst sich dadurch von dem Tastknopf des Mikroschalters, wodurch das DOM 10 aktiviert wird.

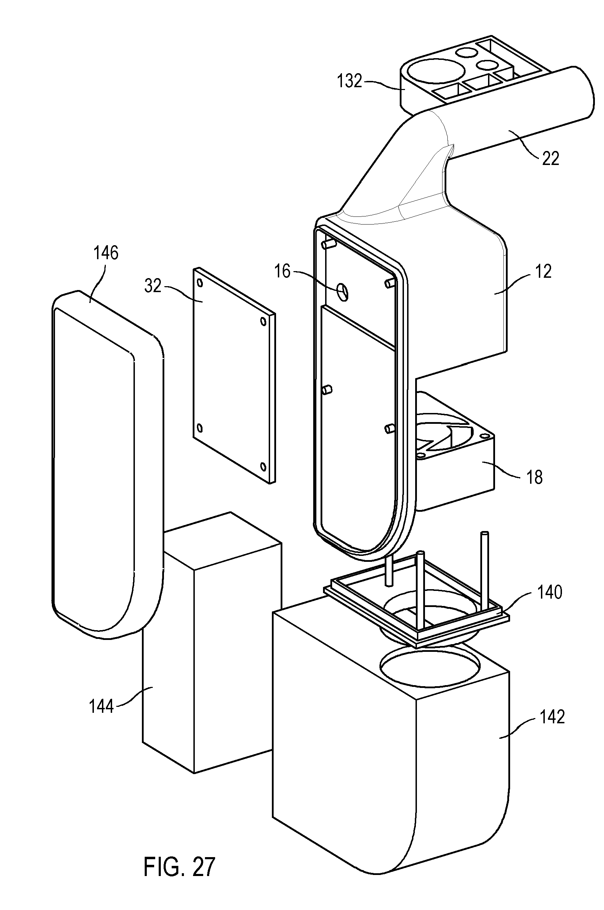

Die Halterungsplatte 132 ist ein Teil des Gehäuses 12 des DOM 10. In Fig. 27 sind die einzelnen Komponenten des DOM 10 in einer Explosionsdarstellung gezeigt. An der Halterungsplatte 132 ist das Ansaugrohr 22 angesetzt, das in einen Bereich mit etwa quadratischem Querschnitt übergeht, in dem sich der VOC-Sensor 16 befindet und der Lüfter 18 sitzt, der mittels eines Lüfterauslassstutzens 140 gehalten wird. An den Lüfterauslassstutzen 140 ist ein Filtergehäuse 142 angeklemmt, das einen Aktivkohlefilter 144 enthält. Seitlich an dem Gehäuse 12 ist eine flache Abdeckung 146 befestigt, unter der sich die Platine 32 mit der gedruckten Schaltung der Steuerung befindet.

Über eine nicht dargestellte Öffnung in der Wand des WC-Beckens 34 ist das Ansaugrohr 22 mittels eines flexiblen Schlauches 148 mit den Absaugkanälen 108 verbunden. Das Batteriegehäuse ist auf ähnliche Weise an der anderen Seite des WC-Beckens 34 befestigt, und mittels der in Fig. 24 erkennbaren elektrischen Leitung 150 wird von dort der Strom zu dem DOM 10 geleitet.

In allen Ausführungsbeispielen kann das DOM 10 eine Deodorisierungseinrichtung in Form einer Ionisierungseinrichtung 24 oder eines Aktivkohlefilters 144 oder einer Kombination beider Einrichtungen aufweisen. Der Sensor 16 kann dabei jeweils ein VOC-Sensor oder ein H₂-Sensor sein.

### Bezuaszeichenliste

- 10: DOM
- 12: Gehäuse
- 14: Strömungskanal
- 16: Sensor
- 18: Lüfter
- 19: Auslassöffnung
- 20: Ionisationsröhre
- 22: Ansaugrohr
- 24: Ionisierungseinrichtung
- 26: Hochspannungseinheit
- 28: Steuereinheit
- 29: Notventil
- 30: Netzteil
- 32: Platine
- 34: WC-Becken
- 36: Sitzbrett
- 38: Deckel
- 40: Spülkasten
- 42: Spülrohr
- 44: Verbindungsstück
- 46: Abflussverbindungsstück
- 48: Abflussrohr
- 50: Abflussstutzen
- 52: Kanal
- 54: Verbindungsrohr
- 57: Spülventil
- 56: Überlaufrohr
- 58: Adapter
- 60: U-Stück
- 62: Öffnung
- 64: Ventil
- 65: Wassersensor
- 68: Prisma-Element
- 70: Durchführung
- 80: Venturi-Ventil
- 72: Kugelventil
- 73: Kugel
- 74: Fassung
- 75: Stutzen
- 76: Schulter
- 77: Kippventil
- 78: Ventilaufnahme
- 80: Führungskäfig
- 82: Schwimmer
- 84: Torsionsventil
- 86: Rahmen
- 88: Abstützung
- 90: Schwimmer
- 92: Kanal
- 94: Gummirohr
- 95: Kompensationskammer
- 96: Winkelstück
- 98: Öffnung
- 100: ringförmiger Kanal
- 102: Spülwasserstutzen
- 103: Öffnungen (ringförmiger Kanal)
- 104: Verengungen
- 106: dritte Öffnung
- 108: Absaugkanäle
- 110: Hörner
- 112: Öffnungen (Hörner)
- 114: Öffnungen für Wandmontage
- 116: Öffnungen (Sitzbrettmontage)
- 118: stationärer Teil
- 120: Batteriegehäuse
- 122: äußere Hülse
- 124: innere Hülse
- 126: Flansch für 122
- 128: Flansch für 124
- 130: Federelement
- 132: Halterungsplatte
- 134: Einstellschraube
- 136: Hebel
- 137: Tastknopf
- 138: Schalteinrichtung
- 140: Lüfterauslassstutzen
- 141: Befestigungsschraube
- 142: Filtergehäuse
- 144: Aktivkohlefilter
- 146: Abdeckung
- 148: flexibler Schlauch
- 150: elektrische Leitung

## Patentansprüche

1. Vorrichtung zum Vermeiden von lästigen Gerüchen auf Toiletten, mit einem Lüfter (18) zum Absaugen von Luft aus dem Innenbereich des WC-Beckens (34), mit einer Deodorisierungseinrichtung (24) zur Beseitigung von Geruchsmolekülen und mit einer Schalteinrichtung zum Einschalten der Vorrichtung bei Benutzung der Toilette, **gekennzeichnet durch** einen Sensor (16), der die abgesaugte Luft auf Geruchsmoleküle untersucht und bei Vorhandensein von Geruchsmolekülen ein Signal erzeugt, und **durch** eine Steuerung, die ohne dieses Signal den Lüfter (18) auf eine niedrige Leistung schaltet und bei Anliegen dieses Signal den Lüfter auf eine höhere Leistung schaltet.

2. Vorrichtung nach Anspruch 1, wobei die niedrigere Leistung etwa 50 % der höheren Leistung ist.

3. Vorrichtung nach Anspruch 1 oder 2, wobei der Sensor (16) ein VOC-Sensor oder ein H₂-Sensor ist.

4. Vorrichtung nach einem der Ansprüche 1 bis 3, wobei die Deodorisierungseinrichtung ein Aktivkohlefilter (144) oder eine Ionisierungseinrichtung (24) ist.

5. Vorrichtung nach einem der Ansprüche 1 bis 4, wobei der Sensor (16) ein VOC-Sensor ist und die Deodorisierungseinrichtung ein Aktivkohlefilter (144) ist und wobei aus der Änderung des Signals des VOC-Sensors (16), das die Konzentration der oxidierbaren Geruchsmoleküle wiedergibt, das Signal zur Steuerung des Lüfters (18) erzeugt wird.

6. Verfahren zum Vermeiden von lästigen Gerüchen auf Toiletten, wobei mittels eines Lüfters (18) Luft aus dem Innenbereich des WC-Beckens (34) abgesaugt wird, mittels einer Deodorisierungseinrichtung (24) Geruchsmoleküle beseitigt werden und mittels einer Schalteinrichtung die Vorrichtung bei Benutzung der Toilette eingeschaltet wird, **dadurch gekennzeichnet, dass** die abgesaugte Luft mittels eines Sensors (16) auf Geruchsmoleküle untersucht wird, der bei Vorhandensein von Geruchsmolekülen ein Signal erzeugt, und der Lüfter (18) ohne dieses Signal mit einer niedrigen Leistung betrieben wird und bei Anliegen dieses Signal mit einer höhere Leistung betrieben wird.

7. Toilettenausstattung mit einem WC-Becken (34), mit einer Spüleinrichtung (40), und mit einer Deodorisierungsvorrichtung (10) nach einem der Ansprüche 1 bis 5, die über ein Ansaugrohr (22) Luft aus dem Inneren des WC-Beckens (34) absaugt.

8. Toilettenausstattung nach Anspruch 7, wobei am Rand des WC-Beckens (34) ein ringförmiger Kanal (100) verläuft, der über Verengungen (104) mit dem Spülrohr (42) verbunden ist und aus dem das Spülwasser in das WC-Becken (34) austritt, und wobei Absaugkanäle (108) nach den Verengungen (104) von dem ringförmigen Kanal (100) abzweigen und an ihrem Ende Öffnungen zur Verbindung mit dem Ansaugrohr (22) der Deodorisierungsvorrichtung (10) aufweisen.

9. Toilettenausstattung nach Anspruch 7 oder 8, wobei eine Befestigungseinrichtung des stationären Teils (118) des Sitzbrettes ein vertikal gegen die Kraft eines Federelements (130) verschiebbares Bauteil (124) aufweist und durch die Verschiebung des Bauteils die Schalteinrichtung (138) betätigt wird.

10. Toilettenausstattung nach Anspruch 9, wobei die Deodorisierungsvorrichtung (10) von der Befestigungseinrichtung (122) des stationären Scharnierteils (118) abgehängt ist.
